# EUROPEAN PATENT APPLICATION

(11) **EP 1 453 048 A2**
(43) Date of publication of application: **01.09.2004**
(21) Application number: 04004232.7
(22) Date of filing: 25.02.2004
(51) Int. Cl.: G11B 17/04

(54) **Disc-transfer roll for disc device**

(30) Priority: 26.02.2003 JP 2003049040
(71) Applicant: ORION ELECTRIC CO., Ltd., Takefu-shi, Fukui 915-8555 (JP)
(72) Inventor: Azai, Kouji, Takefu-shi Fukui, 915-8555 (JP)
(74) Representative: VOSSIUS & PARTNER

(57) **Abstract**

To provide a disc-transfer roll (1) for use in a disc device (10) which can firmly hold and transfer a disc (D) without slip, it comprises a hollow cylindrical body (2) of an elastic material and a cylindrical support body (3) press-fitted in the hollow cylindrical body. The hollow cylindrical body (2) has a plurality of spline slots (2a) formed on its inner circumference, whereas the cylindrical support body (3) has another plurality of spline ridges (3a, 3c or 3d) to define predetermined unfilled spaces (2a, 3e, 5, 6 or 7) between the concentric cylindrical bodies (2 and 3) (Fig. 1).

## Description

The present invention relates to a disc-transfer roll, a pair of which is to be arranged on the opposite sides of the disc slot to sandwich and transfer a disc in a disc device.

A disc device rotates a disc such as CD, DVD or the like on its turntable for recording and/or reproducing sound or pictures from the disc. There are two main ways to load a disc onto a turntable, one is to put a disc on a disc tray which appears from the disc slot of the disc device, and then the disc tray is withdrawn to carry the disc to the turntable. The other is to insert the disc from the disc slot directly by hand, and then the disc is pulled in and carried to the turntable. The present invention relates to the latter disc-loading mechanism.

Such pull-in type disc loader is shown in JP-A 63-298761 as titled "Disc Player" and JP-A 2002-304798 as titled "Disc Recording and/or Reproducing Device". JP-A 63-298761 discloses upper and lower transfer rolls so arranged that the confronting rolls may sandwich a disc when it appears inside from the disc slot, and that they rotate in opposite directions to transfer the disc to the turntable in the disc device. There is, however, a fear that the disc can be scratched when it is pinched and transferred by the opposite rotating rolls. Also, disadvantageously unpleasing sound may be produced, and the rotating rolls may slip on the disc, thereby losing the exact control in transportation.

JP-A 2002-304798 discloses vertical rolls each having a circumferential groove of arc cross-section made in the middle to catch a disc by the circumference. The roll has a damper member applied to its circumferential groove. The damper member is of rubber or any other material of increased friction index. The area in which the damper member can be put in contact with the disc circumference is very small, and the damper member is not hollow. The damper member, therefore, cannot help use of its own flexibility to absorb and share the burden of the disc. This is insufficient for the purpose.

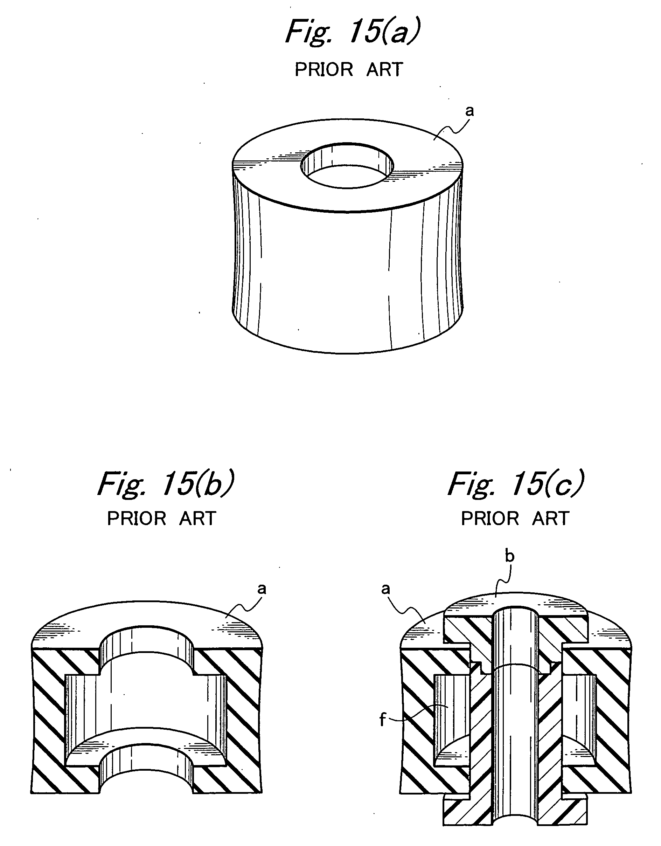

Referring to Figs.15a, 15b and 15c, a conventional disc-transfer roll of vertical type, comprises a rubber hollow cylinder "a" and a hollow axle "b" passing through the hollow cylinder "a" with an annular space "f" left between the outer circumference of the axle "b" and the inner surface of the hollow cylinder "a". The hollow axle "b" has flanges formed at its opposite ends, and the opposite flanges are laid on the annular top and bottom of the hollow cylinder "a".

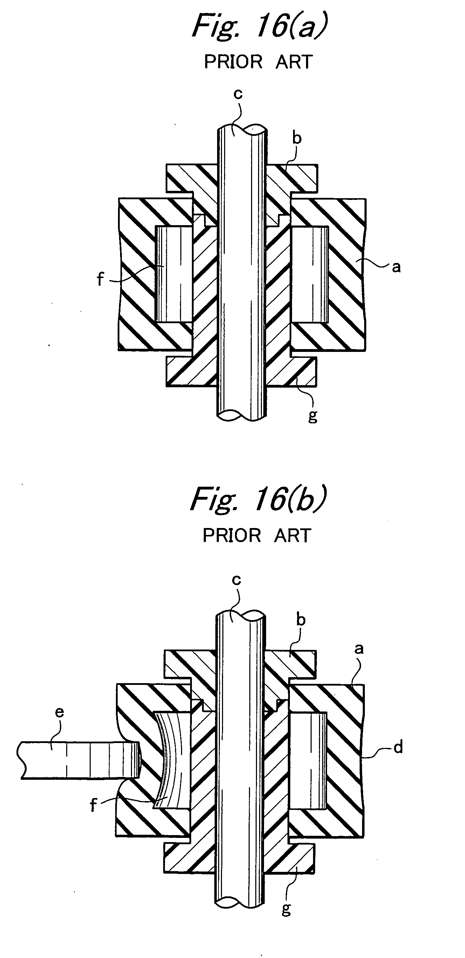

Referring to Figs.16a and 16b, a shaft "c" is inserted in the hollow axle "b" of the roll, so that it may rotate about the shaft "c". When a disc "e" is applied to circumferential surface "d" of the hollow cylinder "a" as a vertical roll, the hollow cylinder "a" yieldingly deforms on the circumferential surface "d" to accept the disc circumference. Then, the deformed part of the hollow cylinder "a" wraps the abutting edge of the disc "e". Thus, the disc "e" can be transferred without being scratched on either surface.

When the disc "e" hits and presses its circumferential edge against the circumferential surface "d" of the hollow cylinder "a", the hollow cylinder "d" can be easily deformed (see Fig.16b). The hollow cylinder "a", however, cannot produce a strong counter force. The friction between the hollow cylinder "a" and the disc "e" is so weak that the roll "d" is apt to slip on the disc "e". Also disadvantageously, the roll "d" is so flexible that it largely deforms and that the disc "e" is not stable vertically in position. This causes an adverse effect on the stable transfer of the disc "e" to the turntable, and finally the disc "e" fails to lie on the turntable with precision.

Also, the metal mold to produce such a hollow roll is complicated in shape, and rolls need to be produced one by one. Accordingly the manufacturing efficiency is lowered and accordingly the manufacturing cost is high. When the roll "a" is rotated, it is apt to slip not only on the disc circumference but also on the shaft "c". This causes an adverse effect on the transfer of the disc.

In view of the above one object of the present invention is to provide an improved disc-transfer roll for use in a disc device, which roll can be applied to the disc circumference under pressure strong enough to allow the roll to rotate without slipping, assuring that the disc can be transferred from the disc slot to the turntable or vice versa in a stable condition.

Another object of the present invention is to provide such a disc-transfer roll which can be easily mass-produced at an increased efficiency.

To attain these objects a disc-transfer roll, a pair of which are to be arranged on the opposite sides of a disc slot to sandwich and transfer a disc in a disc device, is improved in that it comprises a hollow cylindrical body of an elastic material, the hollow cylindrical body having a plurality of spline slots formed on its inner circumference, and a cylindrical support body press-fitted in the hollow cylindrical body, the cylindrical support body having another plurality of spline ridges to define predetermined unfilled spaces between the concentric cylindrical bodies.

The predetermined unfilled spaces between the concentric cylindrical bodies can be formed as for instances follows: the number of the spline ridges is smaller than the number of the spline slots; the width of each spline slot is large enough to contain two or more spline ridges, and accordingly the number of the spline ridges is larger than the number of the spline slots; the height of each spline ridge is smaller than the depth of each spline slot; each spline ridge has one side chamfered to form the predetermined unfilled spaces between the concentric cylindrical bodies; and each spline ridge has its middle cut and removed.

The so constructed disc-transfer roll can be yieldingly deformed on the circumference so that the disc may be snugly held and transferred without any fear of scoring the disc surface. Specifically the disc is sandwiched between the opposite rotating rolls, and then the disc is pulled in with increasing pressure applied thereto, enabling the rolls to transfer the disc without slip. The predetermined unfilled spaces between the concentric cylindrical bodies yieldingly deform so that the contact area between the disc edge and the roll surface, and accordingly the friction therebetween may increase, which effectively contributes to the slip-less transfer of the disc from the disc slot to the turntable or vice versa.

The predetermined unfilled spaces between the concentric cylindrical bodies vary with the pressure applied to the roll by the disc, and accordingly the friction between the roll and the disc varies with rotation of the roll, which causes transmission of the torque to the disc more effectively than the friction remains stationary. The roll whose spline ridges are cut and removed in the middles can be largely deformed in the annular unfilled space, assuring that the disc may be held in correct position.

Other objects and advantages of the present invention will be understood from the following description of some disc-transfer rolls according to preferred embodiments of the present invention, which are shown in accompanying drawings.
Fig.1 is a perspective view of a disc-transfer roll according to a first embodiment of the present invention;
Fig.2 is a cross section of the disc-transfer roll;
Fig.3 is an exploded perspective view of the disc-transfer roll;
Fig.4 is a top plan view of the hollow cylindrical body;
Fig.5 is a top plan view of the cylindrical support body;
Fig.6a is a perspective view of the cylindrical support body of a disc-transfer roll according to a second embodiment of the present invention; and Fig.6b is a cross section view of the concentric cylindrical body combination;
Fig.7a is a perspective view of the cylindrical support body of a disc-transfer roll according to a third embodiment of the present invention; and Fig.7b is a cross section view of the concentric cylindrical body combination;
Fig.8a is a perspective view of the cylindrical support body of a disc-transfer roll according to a fourth embodiment of the present invention; and Fig.8b is a cross section view of the concentric cylindrical body combination;
Fig.9a is an exploded perspective view of a disc-transfer roll according to a fifth embodiment of the present invention; Fig.9b is a perspective view of the roll; and Fig.9c is a cross section view of the concentric cylindrical body combination;
Fig.10a is a perspective view of the cylindrical support body of a disc-transfer roll according to a sixth embodiment of the present invention; and Fig.10b is a top plan view of the cylindrical support;
Fig.11 a is a perspective view of the cylindrical support body of a disc-transfer roll according to a seventh embodiment of the present invention; and Fig.11 b is a top plan view of the cylindrical support;
Fig.12 is a cross section of a fragment of a disc-transfer roll according to an eighth embodiment of the present invention;
Fig.13 is a perspective view of a disc device having a pair of disc-transfer rolls arranged on the opposite sides of the disc slot;
Fig. 14 is a top plan view of the disc device, showing its disc transfer mechanism;
Fig.15a is a perspective view of the hollow cylindrical body of a conventional disc-transfer roll; Fig.15b is a longitudinal section of the hollow cylindrical body; and
Fig.15c is a similar longitudinal section of the concentric combination of hollow and support cylindrical bodies; and
Fig.16a is a longitudinal section of the roll having a rotary shaft inserted in its center hole; and Fig.16b is a similar longitudinal section, illustrating how the roll is deformed when a disc hits the roll.

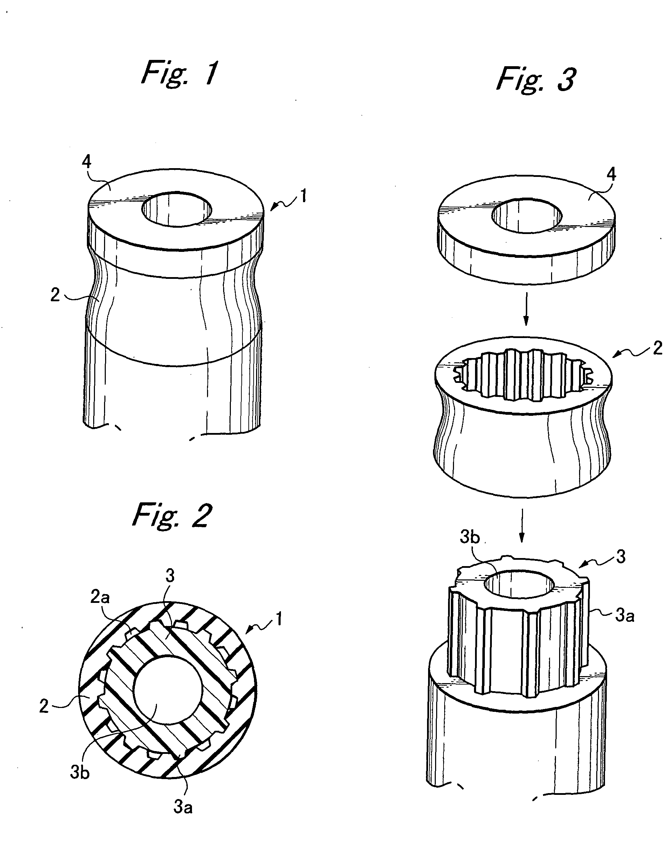

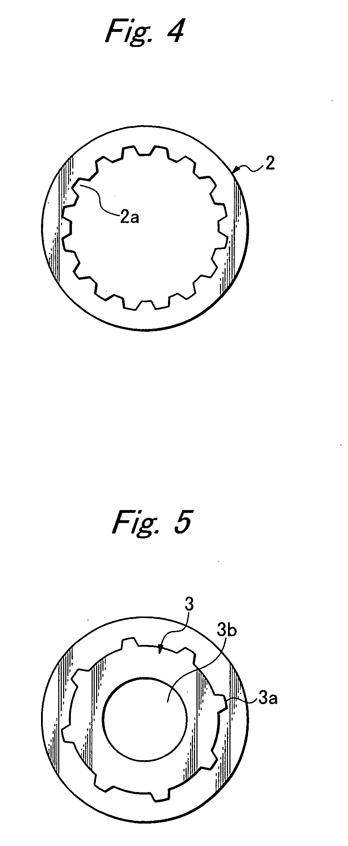

Referring to Figs.1 to 5, a disc-transfer roll according to the first embodiment of the present invention 1 comprises a hollow cylindrical body 2 of an elastic material and a cylindrical support body 3 press-fitted in the hollow cylindrical body 2. The hollow cylindrical body 2 has a plurality of spline slots 2a formed at regular intervals on its inner circumference. Also, the hollow cylindrical body 2 has its outer circumference curved inwards, and looks like a saddle. The cylindrical support body 3 has another plurality of ridges 3a formed at regular intervals on its outer circumference. Each ridge is complementary to the spline slot 2a in shape, and the number of the spline ridges 3a is half of the spline slots 2a (Figs.4 and 5). Thus, half of the spline slots 2a are filled with the spline ridges 3a and the remaining half remain unfilled (see Fig.2).

As seen from Fig.3, the cylindrical support body 3 is press-fitted in the hollow cylindrical body 2 by sliding the cylindrical support body 3 inside the hollow cylindrical body 2 with the spline ridges 3a in alternate spline slots 2a, and by applying an annular cap 4 to the top. The so assembled roll 1 is used by inserting a rotary shaft in the through hole 3b of the cylindrical support body 3.

In operation the pressure that the disc applies to the roll 1 will vary from ridge-filled to unfilled spline slot 2a. Specifically the pressure will periodically change as the roll 1 rotates, and accordingly the friction between the disc and the roll 1 varies.

This enables the roll 1 to transfer the disc without slip, which otherwise would be caused when the friction between the disc and the roll 1 remains constant. Also, the concave circumference of the roll ensures that the roll firmly grips the disc by the circumference, holding it in correct position.

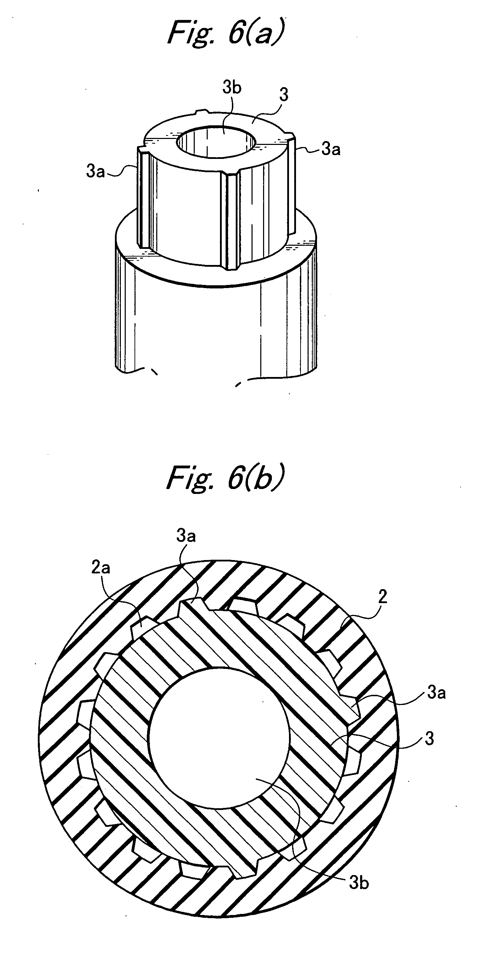

Referring to Figs.6a and 6b, a disc-transfer roll according to the second embodiment of the present invention 1 is different from the first embodiment only in that the cylindrical support body 3 has four spline ridges 3a formed on its circumference. The hollow cylindrical body 2 has sixteen spline slots 2a formed inside, and therefore, twelve spline slots remain unfilled when it is press-fitted in the hollow cylindrical body 2. When the roll is pressed and deformed by the advancing disc, the deformation degree is larger than the roll according to the first embodiment, and the disc can be transferred without being loaded heavily. The friction varies with the load so that no slip may be caused between the disc and the roll.

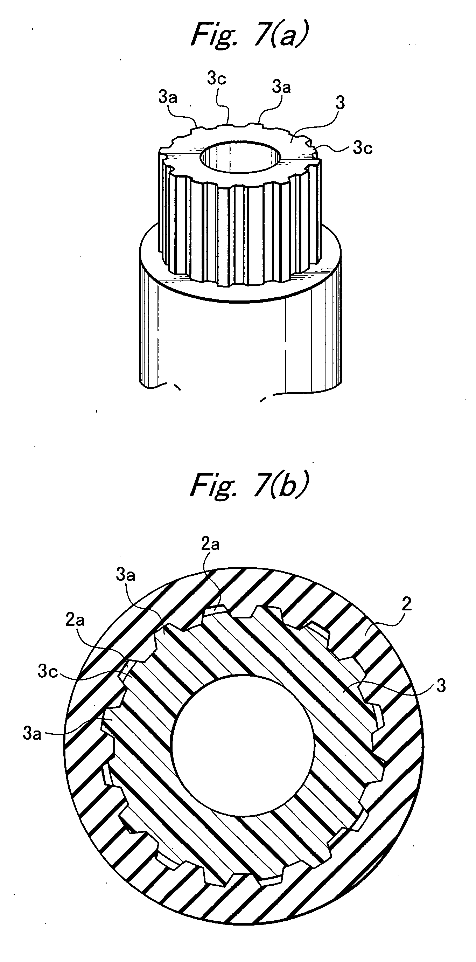

Figs.7a and 7b show a disc-transfer roll according to the third embodiment of the present invention. As shown, the hollow cylindrical body 2 has sixteen spline slots 2a formed inside, and the cylindrical support body 3 has sixteen spline ridges 3a formed on its circumference, too. Half spline ridges 3a, however, are higher than the remaining half ones, which lower spline ridges 3c are arranged alternately with the higher spline ridges 3a. As a result gaps 2a are formed between the lower spline ridges 3c and the inner circumference of the hollow cylindrical body 2. This arrangement makes yielding deformation of the roll smaller and the pressure applied to the roll vary with reduced amplitude.

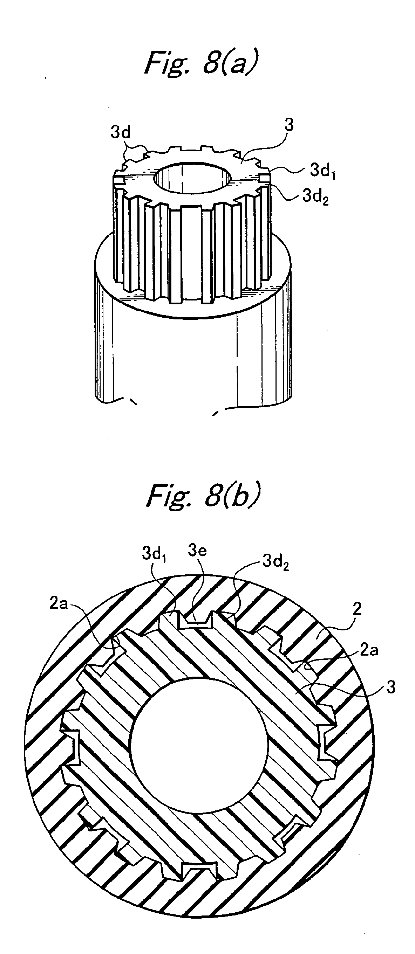

Figs.8a and 8b show a disc-transfer roll according to the fourth embodiment of the present invention. As shown, the hollow cylindrical body 2 has sixteen spline slots 2a, and the cylindrical support body 3 has sixteen spline ridges 3d formed on its circumference. As shown, adjacent spline ridges 3d₁ and 3d₂ have their confronting sides and common bottom cut to form the unfilled space 3e.

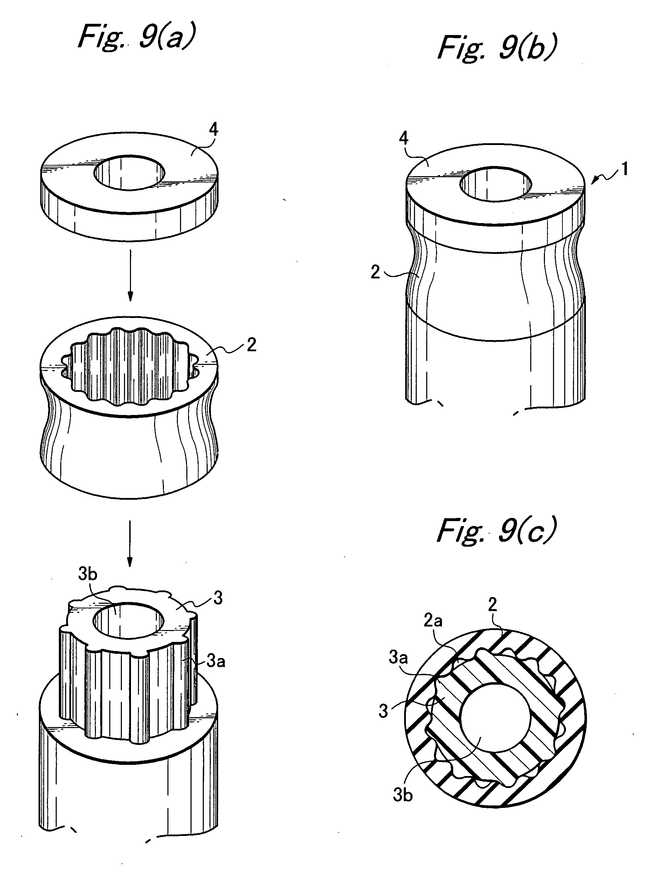

Figs.9a and 9b show a disc-transfer roll according to the fifth embodiment of the present invention. The roll 1 is different from the roll 1 according to the first embodiment only in that the spline ridges and counter spline slots are curved. The eight semicircular spline ridges 3a fit in the counter semicircular spline slots 2a, thus leaving the remaining spline slots 2a unfilled. The unfilled spaces 2a are responsive to the load on the hollow cylindrical body 2 for changing their shapes.

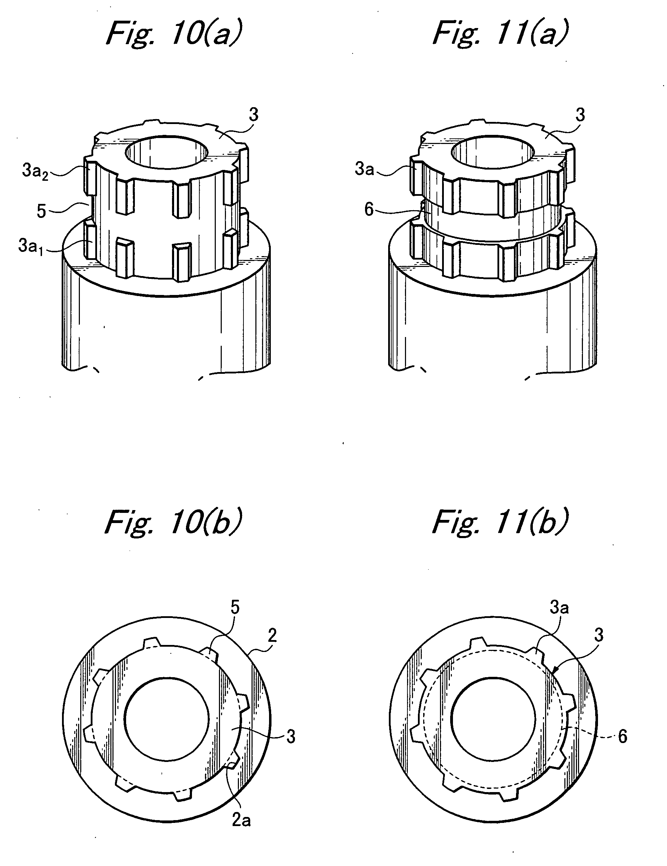

Figs.10a and 10b show a disc-transfer roll according to the sixth embodiment of the present invention. As shown, the roll is different from the first embodiment only in that the spline ridges 3a are cut in the middles to define an annular space 5, which is contiguous to the ridge-to-ridge interfaces. The roll whose cylindrical support body 3 has such an annular unfilled space 5 around can be easily responsive to the hitting disc for yieldingly changing its contour in conformity with the disc edge, and accordingly the gripping and horizontal-positioning function is enhanced.

Figs.11a and 11 b show a disc-transfer roll according to the seventh embodiment. As shown, each spline ridge 3a is cut in the middle, and the so formed annular area is cut still deep to form a deep annular slot 6 around. This makes the roll even more easily responsive to the hitting disc for yieldingly changing its contour in conformity with the disc edge, and accordingly the gripping and positioning function is enhanced still more.

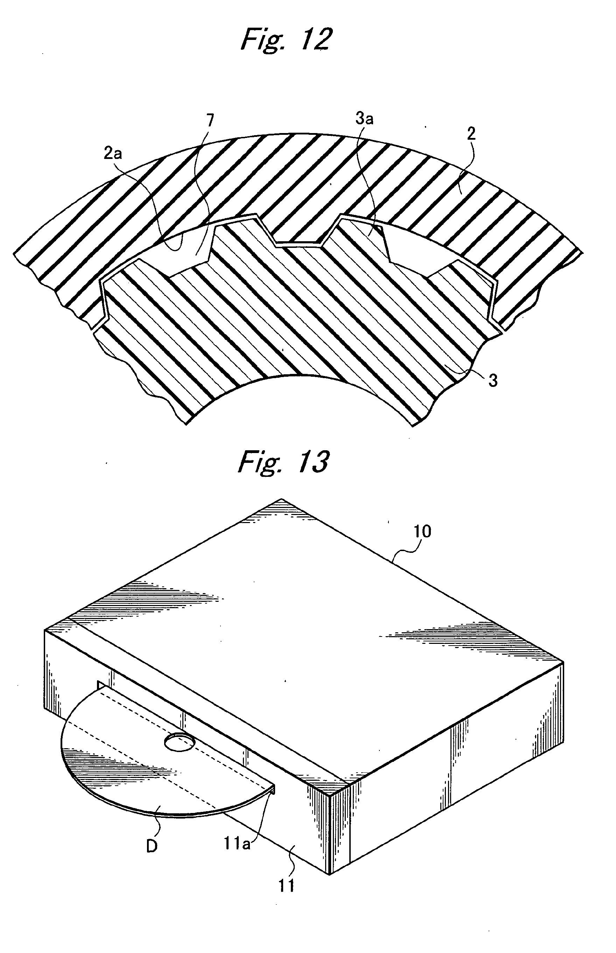

Fig.12 shows a disc-transfer roll according to the eighth embodiment. As shown, the number of the spline ridges 3a is larger than the number of the spline slots 2a, as is opposite to the first embodiment. As shown in the drawing, the unfilled space 7 is defined in each spline slot 2a. Such unfilled spaces 7 are responsive to the load applied by the hitting disc for yieldingly changing their shapes in conformity with the disc.

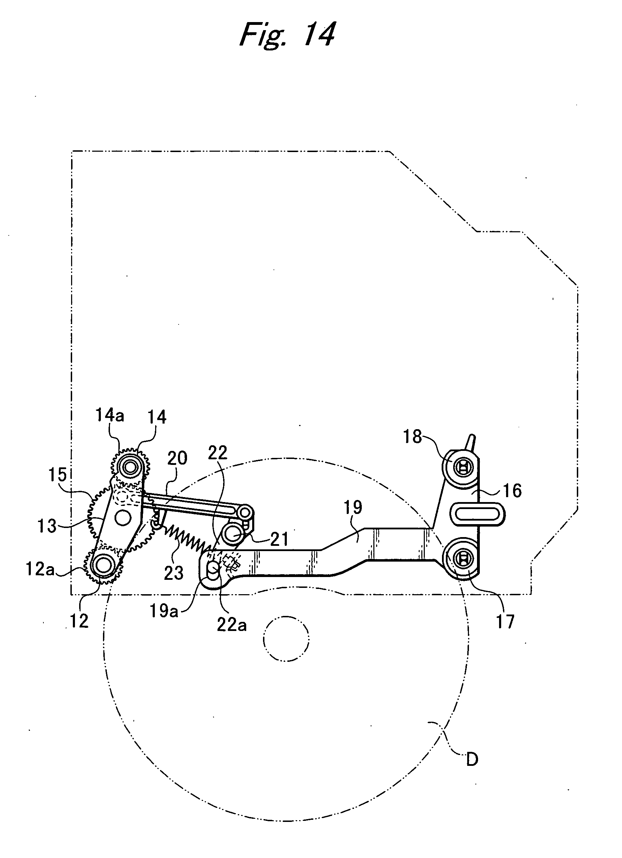

The above mentioned disc-transfer roll is used in such a disc device 10 as shown in Fig.13, in which a disc D is inserted in the disc slot 11 a of the front 11. Fig.14 shows a disc transport mechanism in the disc device 10. As seen from the drawing, a first drive roll 12 is rotatably fixed to the chassis of the device 10 next to the left end of the disc slot 11 a; a swing arm 13 is fixed to the drive roll 12 to swing about the pivot of the drive roll 12; and a second drive roll 14 is fixed to the free end of the swing arm 13. The first drive roll 12 has a first gear 12a fixed to its pivot, and likewise, the second drive roll 14 has a second gear 14a fixed to its pivot.

An intermediate gear 15 is fixed to the swing arm 13 to mesh with the first and second gears 12a and 14a, and the first drive roll 12 is connected to a drive motor (not shown). When the first drive roll 12 is rotated, the second drive roll 14 is driven through the first gear 12a, intermediate gear 15 and second gear 14a. When the swing arm 13 swings about the pivot of the drive roll 12, the second drive roll 14 changes in position. When the disc D is inserted in the disc slot 11 a, the swing arm 13 swings counterclockwise.

On the right side of the disc slot 11a there is a movable slider 16 having first and second rolls 17 and 18 rotatably fixed to its opposite ends. When the disc D is inserted in the disc slot 11a, the slider 16 along with the first and second rolls 17 and 18 moves rightwards.

A first lever 19 is integrally connected to the slider 16 to extend inward, whereas a second lever 20 is fixed to the swing arm 13. A rotatable intermediate lever 22 can rotates about its pivot 21, and is connected to the first and second levers 19 and 20. The first lever 19 is stationary to the slider 16. It has a long hole 19a made at its end, and the intermediate lever 22 has a stud pin 22a on one end. The first lever 19 is movably connected to the intermediate lever 22 with the stud pin 22a in the long hole 19a.

When the disc D is inserted from the disc slot 11 a, the disc edge hits the first drive roll 12 and the first roll 17. The sensor (not shown) detects insertion of the disc D, and then, the drive motor starts running in response to the signal from the sensor, so that the first drive roll 12 may rotate. The drive motor rotates in such a direction that the first drive roll 12 pulls the disc D inward. The disc D is pushed by hand to assist the pulling-in of the disc D by the drive roll 12.

As the disc D moves forward from the disc slot 11 a, the slider 16 moves outwards, and accordingly the distance between the first drive roll 12 and the first roll 17 increases. The first and second levers 19 and 20 are connected by a coiled spring 23 to keep the first roll 17 in contact with the disc D.

The disc D moves forwards until it is put in contact with the second drive roll 14 and the second roll 18. Thus, the disc D is surrounded and pinched by the four rolls, that is, the first and second drive rolls 12 and 14, and the first and second rolls 17 and 18. All the rolls rotate and transfer the disc D to the turntable (not shown). Four rolls closely put in contact with the circumference of a disc permit stable transfer of the disc without slipping.

The disc-transfer roll of the present invention mentioned above is used as these first and second drive rolls 12 and 14, and the first and second rolls 17 and 18 in the disc device 10.

## Claims

1. A disc-transfer roll (1), a pair of which are to be arranged on opposite sides of a disc slot (11a) to sandwich and transfer a disc (D) in a disc device (10), **characterized in that** it comprises a hollow cylindrical body (2) of an elastic material, the hollow cylindrical body having a plurality of spline slots (2a) formed on its inner circumference, and a cylindrical support body (3) press-fitted in the hollow cylindrical body (2), the cylindrical support body (3) having another plurality of spline ridges (3a, 3c or 3d) to define predetermined unfilled spaces (2a, 3e, 5, 6 or 7) between the concentric cylindrical bodies (2 and 3).

2. A disc-transfer roll according to claim 1, wherein number of the spline ridges (3a) is smaller than number of the spline slots (2a) so that the predetermined unfilled spaces (2a) are formed between the concentric cylindrical bodies (2 and 3).

3. A disc-transfer roll according to claim 1, wherein a width of each spline slot (2a) is large enough to contain two or more spline ridges (3a), and number of the spline ridges (3a) is larger than number of the spline slots (2a) so that the predetermined unfilled spaces (7) are formed between the concentric cylindrical bodies (2 and 3).

4. A disc-transfer roll according to any of claims 1 to 3, wherein a height of each spline ridge (3c) is smaller than a depth of each spline slot (2a) so that the predetermined unfilled spaces (2a) are formed between the concentric cylindrical bodies (2 and 3).

5. A disc-transfer roll according to any of claims 1 to 4, wherein each spline ridge (3d) has one side chamfered to form predetermined unfilled spaces (3e) between the concentric cylindrical bodies (2 and 3).

6. A disc-transfer roll according to any of claims 1 to 5, wherein each spline ridge (3a) has its middle cut and removed to form predetermined unfilled spaces (5) between the concentric cylindrical bodies (2 and 3).
